Europäisches Patentamt

European Patent Office

Office européen des brevets

(11) Veröffentlichungsnummer: **0 281 917**
**A2**

(12) **EUROPÄISCHE PATENTANMELDUNG**

(21) Anmeldenummer: 88103157.9

(22) Anmeldetag: 02.03.88

(51) Int. Cl.⁴: **C04B 35/56**

(30) Priorität: **11.03.87 DE 3707714**

(43) Veröffentlichungstag der Anmeldung:
**14.09.88 Patentblatt 88/37**

(84) Benannte Vertragsstaaten:
**DE FR GB**

(71) Anmelder: **BASF Aktiengesellschaft**
**Carl-Bosch-Strasse 38**
**D-6700 Ludwigshafen(DE)**

(72) Erfinder: **Sterzel, Hans-Josef, Dr.**
**Wasgauring 3**
**D-6701 Dannstadt-Schauernheim(DE)**

(54) Verfahren zur Herstellung hochfester und hochtemperaturbeständiger porenfreier keramischer Formteile aus Siliziumcarbid.

(57) Kompakte, porenfreie Formkörper aus Siliciumcarbid werden dadurch hergestellt, daß man amorphes Siliciumcarbidpulver ohne Zusatz von Sinterhilfsmitteln bei Temperaturen von 1 400 bis 1 800°C und Drucken von 100 bis 2 000 kp/cm² zu einem kompakten glasigen Formkörper verpresst. In einer anschließenden Stufe wird der so erhaltene glasige Formkörper bei Temperaturen von 1 950 bis 2 200°C in kristallines α-Siliciumcarbid umgewandelt.

EP 0 281 917 A2

## Verfahren zur Herstellung hochfester und hochtemperaturbeständiger porenfreier keramischer Formteile aus Siliziumcarbid

Basis der nichtoxidkeramischen Werkstoffe sind die Verbindungen zwischen den Elementen Bor, Kohlenstoff, Stickstoff, Silizium, Titan, Zirkonium, Molybdän und Wolfram. Es sind dies die Materialien Siliziumcarbid, Siliziumnitrid, Borcarbid, Bornitrid und die Borsilizide neben den Nitriden und Carbiden des Titans, Zirkoniums, Molybdäns und Wolframs.

Aus Gründen der Oxidationsbeständigkeit und extrem hoher Temperaturbeständigkeit rückte Siliziumcarbid besonders in den Vordergrund. Siliziumcarbid wird durch Reduktion von in der Natur genügend vorhandenem Siliziumdioxid mit Kohlenstoff im elektrischen Ofen hergestellt.

Es wird seit der Jahrhundertwende großtechnisch hergestellt und für metallurgische, schleif-und feuerfest-technische Zwecke eingesetzt. Die speziellen günstigen Eigenschaften des Siliziumcarbids können in Werkstücken erst ausgenützt werden, seitdem Verfahren entwickelt wurden, das Grundmaterial mit nur wenig fremden Bindemitteln zu Werkstücken zu verarbeiten.

Für die Herstellung von Siliciumcarbid-Sintererzeugnissen sind verschiedene Verfahren bekannt.

Beim Reaktionssinterverfahren (H. Knoch, Herstellung und Eigenschaften verschiedener Siliciumcarbidwerkstoffe, Technische Akademie Esslingen, Weiterbildungszentrum März 1985, Lehrgang 7578/67.017), werden Grünkörper aus Siliciumcarbid und Kohlenstoff bei Temperaturen oberhalb 1400°C mit Silicium infiltriert, wobei sich dieses mit dem vorhandenen Kohlenstoff zu Siliciumcarbid umsetzt. Um dichte Formkörper zu erhalten, muß mit einem Überschuß an Silicium gearbeitet werden, so daß nach diesem Verfahren hergestellte Produkte einen Überschuß von 6-15 Gew.% freies Silicium enthalten, was für die Eigenschaften nachteilig ist. Außerdem lassen sich hiermit nur relativ dünnwandige Bauteile herstellen, da bei größeren Wandstärken die Infiltration problematisch ist.

Heißgepreßte Formkörper aus Siliciumcarbid werden erhalten durch einachsiges Verpressen von Siliciumcarbid bei Temperaturen um 2000°C, das mit Sinteradditiven wie Bor, Aluminium und Kohlenstoff dotiert ist (vgl. J. Am. Ceram. Soc. 69(4), C67 - C68). Nachteil dieses an sich schon aufwendigen Verfahrens ist, daß nur Formkörper mit einfacher Geometrie hergestellt werden können. Für die Herstellung komplizierter Formteile müssen diese einfachen Formteile in aufwendigen Schleifbearbeitungs prozessen bearbeitet werden, was wegen der großen Härte von Siliciumcarbid nur mit teuren Diamantwerkzeugen durchgeführt werden kann.

Beim heißisostatischen Pressen (Knoch, loc.cit.) wird das Formteil bei der Sintertemperatur unter allseitig wirkendem hohen Gasdruck eines inerten Gases allseitig verdichtet. Hierbei werden Gasdrucke von etwa 2000 Bar bei Temperaturen von etwa 2000°C eingehalten. Zweckmäßigerweise kombiniert man das Heißpressen mit dem heißisostatischen Pressen, indem das Heißpressen soweit durchgeführt wird, bis die äußeren Poren geschlossen sind und der Formkörper anschließend heißisostatisch weitergesintert werden kann.

Bevorzugt wird Siliciumcarbid drucklos gesintert. Auch bei diesem Verfahren ist die Anwendung von Sinterhilfsmitteln Voraussetzung, wobei hierfür die verschiedensten Verbindungen bekannt geworden sind. Gemäß der DE-OS 36 03 331 werden hierfür Aluminium oder feuerfeste Aluminiumverbindungen sowie Boride eingesetzt (z.B. $TiB_2$, $ZrB_2$ und $CrB_2$). Gemäß der US-PS 4,372,902 werden ebenfalls Boride und Kohlenstoffhaltige Verbindungen empfohlen, ebenso wie in der EU-OS 157 586 sowie in der EU-A 165 554.

Unabhängig von den zugegebenen Sinterhilfsmitteln werden die Grünlinge bei Temperaturen von 1900 bis 2300°C zu Siliciumcarbidwerkstoffen drucklos oder bei schwach erhöhtem Druck versintert. Da auch hierbei für die Herstellung der Grünlinge jede in der keramischen Industrie übliche Formgebungsmethode herangezogen werden kann, besteht gegenüber dem Heißpress-Verfahren ein bedeutender Vorteil. Ein Nachteil besteht jedoch darin, daß dieses Verfahren von einer Sinterschwindung begleitet ist, die linear bei etwa 18% liegt (vgl. japanische Patentanmeldung 83/120767).

Die zum Sintern benötigten Hilfsstoffe reagieren mit der Oberfläche der Siliziumcarbid-Körner und bilden dort eine unter den Sinterbedingungen flüssige Glasphase. Beim Abkühlen bleibt diese intergranulare Glasphase erhalten und bewirkt durch ihre relativ niedrige Erweichungstemperatur eine Absenkung der Festigkeit des Formkörpers oberhalb dieser Erweichungstemperatur, die meist im Bereich von 1400 bis 1500°C liegt. Außerdem wird durch die Glasphase das unterkritische Rißwachstum unter Last gefördert und damit die Lebensdauer des Formkörpers verkürzt.

Zur Herstellung der Rohlinge oder Grünlinge kommen im allgemeinen mehrere Verfahren in Betracht:

Für Stückzahlen in mittlerer Größe wird das keramische Schlickergießverfahren angewendet. Bei diesem wird das Ausgangspulver mit einer Flüssigkeit zu einem Schlicker vermengt, der, in eine poröse Form gegossen, diese ausfüllt. Durch Entzug der Flüssigkeit in der Form entsteht der keramische Rohling.

Die keramische Gießform ist mit relativ wenig Aufwand herzustellen.

Für große Serien wird das automatische Trockenpreßverfahren oder das Spritzgießverfahren eingesetzt. Beide benötigen aufwendige Werkzeuge, arbeiten aber mit sehr kurzen Taktzeiten. Für komplexe Formen, wie bei Gasturbinenbauteilen, wird das Spritzgießen verwendet. Hierzu wird die Masse mit thermoplastischen Kunststoffen und/oder Wachsen versetzt, in einer geeigneten Maschine erhitzt und in die Form gepreßt, in der der Kunststoff aushärtet. Das Verfahren bedarf eines weiteren Schrittes, und zwar der Beseitigung des Kunststoffes durch Pyrolyse. Dieser Prozeß erschwert das Verfahren, vor allem bei den Produkten, welche keinen Kohlenstoff enthalten dürfen, wesentlich. Das Pyrolisieren erfolgt bei steigender Temperatur bis zu 1000°C und kann je nach Wanddicken bis zu mehrere Tagen benötigen.

Ein wesentliches Problem bei der Herstellung keramischer Bauteile ist die Erreichung der Gleichmäßigkeit innerhalb eines Stückes und von Stück zu Stück. Inhomogenitäten bewirken bei diesen plastisch nicht verformbaren Stoffen sofort Spannungen, welche die Festigkeit ungünstig beeinflussen.

Wegen der Inhomogenitäten und Mikrorisse mit Dimensionen von 5 bis 50 μm gelang es bisher nicht, hochbelastbare keramische Formkörper herzustellen, deren Festigkeitswerte, insbesondere bei hohen Temperaturen, innerhalb konstruktiv zulässiger Grenzen konstant sind. Für den praktischen Einsatz ist dies umso bedeutungsvoller, als es noch keine praxisorientierte zuverlässige zerstörungsfreie Prüfverfahren gibt, die eine Aussonderung der ungeeigneten Formteile ermöglichen.

Es war Aufgabe der Erfindung, die aufgezeigten Nachteile der bekannten Verfahren zur wirtschaftlichen Fertigung von zuverlässigen keramischen Bauteilen aus Siliciumcarbid mit hoher Steifigkeit und Festigkeit bei hohen Anwendungstemperaturen zu umgehen.

Damit bestand die Aufgabe darin, ein Verfahren zur Herstellung kompakter, porenfreier, lunker-und mikrorißloser Formteile aus Siliziumcarbid zu entwickeln. Es war weiterhin Aufgabe der Erfindung, ein Verfahren zu entwickeln, mit dem sich die Formteile mit den entsprechenden Eigenschaften in wirtschaftlicher Weise herstellen lassen.

Eine weitere Aufgabe bestand darin, ein Verfahren zur Herstellung obiger Formteile zu finden, das ohne festigkeits-, steifigkeits-und temperaturbeständigkeitsmindernde Zuschlagstoffe auskommt.

Die Aufgaben werden erfindungsgemäß dadurch gelöst, daß man in einer ersten Stufe amorphes Siliciumcarbidpulver ohne Zusatz von Sinterhilfsmitteln bei Temperaturen von 1400 bis 1800°C und Drucken von 100 bis 2000 kp/cm² zu einem kompakten glasigen Formkörper verpresst und in einer zweiten Stufe das amorphe Siliciumcarbid bei Temperaturen von 1950 bis 2200°C in kristallines α-Siliciumcarbid umwandelt.

Bei dem erfindungsgemäßen Verfahren wird in der ersten Stufe unterhalb einer Temperatur bei der eine schnelle Kristallisation des Siliciumcarbids einsetzt, unter Druck zu einem kompakten, porenfreien und glasigen Formkörper der gewünschten Gestalt verpreßt und in der zweiten Stufe das amorphe Siliciumcarbid in kristallines α-Siliciumcarbid übergeführt.

Die Erfindung wird im folgenden näher erläutert:

Feinteilige, amorphe Ausgangsmaterialien mit Korngrößen von 0,001 bis 0,2 μm erhält man nach dem Stand der Technik, indem SiH$_4$ und CH$_4$/C$_2$H$_4$ in der Gasphase zur Reaktion gebracht werden, wobei ein CO$_2$-Laser als Energiequelle dient (s. z.B. Haggerty, John S.; Cannon, W. Roger in "Laser-Induced Chem. Processes", 1981, 165-241; Ed. by Steinfeld, Jeffrey J.; Plenum, New York).

Eine weitere Möglichkeit der Synthese von amorphem Siliziumcarbid besteht beispielsweise in der Umsetzung von SiCl$_4$ und CCl$_4$ mit Natrium in einem inerten Lösungsmittel, wie n-Heptan bei 130°C (s. Better Ceramics Through Chemistry II, Materials Research Society, Symposia Proceedings, Vol. 73, 1986, Seite 369). Typische Partikelgrößen liegen bei 1-5μm.

Amorphes Siliziumcarbid, das vorzugsweise eine Korngröße von 1 bis 2 μm aufweist, wird nun in einem ersten Schritt bei Temperaturen von 1400 bis 1850°C und Drucken von 100 bis 2000 kp/cm², vorzugsweise 500 bis 1000 kp/cm² zu einem glasigen Formkörper verpreßt. Ein wesentlicher Vorteil des erfindungsgemäßen Verfahrens beruht darauf, daß sich das Siliziumcarbid in diesem Temperaturbereich in einem fließfähigen Zustand befindet. Dadurch wird der Druck auf die Formmasse gleichmäßig, auch in entfernte Teile der Form, weitergeleitet. Dieser beim Sintern von keramischen Massen nicht vorhandene Effekt führt beim erfindungsgemäßen Verfahren dazu, daß kompliziert gestaltete Formteile mittels einer Art Kolbenspritzgußmaschine in Produktionszyklen, die nur durch die Fließfähigkeit der Formmasse begrenzt ist, in großer Stückzahl wirtschaftlich herstellbar sind.

Bei der Ausführung des ersten Verfahrensschritts ist wichtig, daß ein sehr reines amorphes Siliziumcarbid eingesetzt wird; insbesondere sollte die Oberfläche der Partikel praktisch frei vom Siliziumdioxid sein. Deshalb wird dieser Schritt in einer Schutzgasatmosphäre, bevorzugt Argon, durchgeführt.

Dies muß bereits bei der Herstellung der Pulver beachtet werden, da sich besonders feinteiliges SiC unter dem Einfluß von Sauerstoff und/oder Feuchtigkeit schnell mit einer SiO$_2$-Schicht überzieht, welche die spätere Kompaktierung behindern würde.

Die optimale Verarbeitungstemperatur und die zur Kompaktierung benötigte Zeit verhalten sich nahezu umgekehrt proportional zueinander. So wandelt sich das amorphe Siliciumcarbid bei 1450°C innerhalb von mehreren 100 h, bei 1750°C innerhalb von 5 h und bei 1800°C innerhalb von 1 Stunde in $\beta$-Siliciumcarbid um. Die Umwandlung in $\beta$-Silicumcarbid sollte möglichst vermieden werden.

Dementsprechend kann die Verarbeitungszeit bei niedrigen Temperaturen innerhalb des genannten Bereiches groß sein, bei hohen Temperaturen muß sie schnell erfolgen, d.h. sie sollte 1 h nicht übersteigen. Da bei hohen Temperaturen die Verarbeitungszeit kurz ist und gleichzeitig die Viskosität und damit der aufzubringende Preßdruck niedrig ist, werden Temperaturen von 1700 bis 1800°C bevorzugt.

In einem zweiten sich anschließenden Verfahrensschritt wird der amorphe, glasige Formkörper durch Kristallisation in den eigentlichen keramischen Formkörper überführt. Bei diesem Verfahrensschritt werden Temperaturen von 1950 bis 2200°C angewandt. Diese Behandlung in der zweiten Stufe kann bei beliebigen Drucken durchgeführt werden, erfolgt aber vorzugsweise drucklos, wobei allerdings die Behandlung unter Formzwang erfolgen sollte, um ein Verwinden des Formkörpers und damit einen Verlust der Maßhaltigkeit zu vermeiden. Dazu sind jedoch nur geringe Haltekräfte erforderlich. Der Formzwang ist auch notwendig, weil während der Aufheizphase bis zur Erreichung einer Mindestkristallinität von 5 bis 20% aufgrund der erniedrigten Viskosität ein Fließen des Formkörpers erfolgen kann und so die Maßhaltigkeit nicht mehr gegeben ist.

Die Dauer der Behandlung in der zweiten Stufe, in der das amorphe Siliciumcarbid in kristallines $\alpha$-Siliciumcarbid umgewandelt wird, beträgt im allgemeinen etwa 10 bis 100 Minuten. Zur Erhöhung der Kristallisationsgeschwindigkeit können in vorteilhafter Weise dem zu verarbeitenden amorphen Siliciumcarbid als Nukleierungsmittel feinteiliges $\alpha$-Siliciumcarbid zugegeben werden. Die Teilchengrößen des Nukleierungsmittels betragen zweckmäßig 0,001 bis 1 $\mu$m, und es wird in Konzentrationen von 0,0001 bis 1 Gew.% eingesetzt, so daß Keimzahlen von $10^9$ bis $10^{15}$ Keimen pro cm$^3$ Siliciumcarbid erhalten werden.

Neben der Möglichkeit, absolut poren-und mikrorißfreie Formkörper aus SiC herzustellen, weist das erfindungsgemäße Verfahren noch einen gewichtigen Vorteil auf:

Wenn man die Kristallisation des Formkörpers in einem örtlichen Temperaturgradienten durchführt, gelingt eine gerichtete Kristallisation, die die Ausrichtung bestimmter kristallographischer Achsen in eine gewünschte Vorzugsrichtung gestattet. So ist es möglich, Kristallflächen, von denen bekannt ist, daß Druck- oder Reißfestigkeit in ihrer Richtung besonders groß sind, derart in den Formkörper zu legen, daß gerade diese Kristallflächen in Richtung der maximalen mechanischen Beanspruchung des herzustellenden Formkörpers liegen.

Da die thermische Ausdehnung in den meisten Fällen anisotrop ist, d.h. die Kristallachsen sich verschieden stark ausdehnen, ist es von Vorteil, durch die gerichtete Kristallisation die Kristallachsen so auszurichten, daß im Formkörper die thermische Ausdehnung in gewünschte Richtungen gelenkt wird.

Die nach der Erfindung hergestellten Formkörper können als hochbelastbare Bauelemente Anwendung in Kolbenmotoren, Gasturbinen, Wärmetauschern, Abgasturboladern oder beispielsweise als Substrate für integrierte Schaltkreise finden.

Beispiel

Ein durch Umsetzung von Siliciumtetrachlorid mit Tetrachlorkohlenstoff und Natrium erhaltenes amorphes Siliziumcarbid mit einem Sauerstoffgehalt < 0,1 Gew.% und einer mittleren Korngröße von 1,5 $\mu$m, das als Nukleierungsmittel 0,1 Gew.% $\alpha$-SiC mit einer Korngröße von ca. 0,5 $\mu$m enthielt, wurde bei 1800°C und einem Druck von 1000 kp/cm$^2$ innerhalb von 15 min zu einem glasigen, porenfreien Formkörper mit den Maßen 3,5 $\times$ 4,5 $\times$ 60 mm gepreßt. Der Preßling wurde in eine auf 2000°C vorgeheizte Form überführt und dort innerhalb von 10 min kristallisiert. Damit wurde ein porenfreier Formkörper erhalten, der nach Röntgenmessung aus 100% kristallinem $\alpha$-SiC bestand. Mittels einer Vier-Punkt-Messung wurden die Biegefestigkeiten mit einer Prüfgeschwindigkeit von 0,5 mm/min bei verschiedenen Temperaturen gemessen. Hierzu wird der Prüfkörper mit der 4,5 $\times$ 60 mm-Fläche mittig auf zwei Schneiden gelagert, die einen Abstand von 40 mm aufweisen. Auf diese Anordnung wird von oben mittig ein Stempel mit der genannten Prüfgeschwindigkeit bewegt, der die beiden Gegenschneiden im Abstand von 20 mm trägt.

| Temperatur (°C) | Messung | Meßwert( kp/cm$^2$) |
|---|---|---|
| 20 | Biegefestigkeit | 9.000 |
| 1000 | Biegefestigkeit | 9.000 |
| 1500 | Biegefestigkeit | 8.500 |
| 20 | E-Modul | 4.800.000 |

**Ansprüche**

1. Verfahren zur Herstellung kompakter, porenfreier Formkörper aus Siliciumcarbid durch Sintern von pulverförmigem Siliciumcarbid bei erhöhten Temperaturen, dadurch gekennzeichnet, daß man in einer ersten Stufe amorphes Siliciumcarbidpulver ohne Zusatz von Sinterhilfsmitteln bei Temperaturen von 1400 bis 1800°C und Drucken von 100 bis 2000 kp/cm$^2$ zu einem kompakten glasigen Formkörper verpresst und in einer zweiten Stufe das amorphe Siliciumcarbid bei Temperaturen von 1950 bis 2200°C in kristallines $\alpha$-Siliciumcarbid umwandelt.

2. Verfahren nach Anspruch 1, dadurch gekennzeichnet, daß das amorphe Siliciumcarbidpulver eine Korngröße von 1 bis 2 μm aufweist.

3. Verfahren nach Ansprüchen 1 und 2, dadurch gekennzeichnet, daß das amorphe Siliciumcarbidpulver als Nukleierungsmittel kristallines $\alpha$-Siliciumcarbid in einer Menge von 0,0001 bis 1 Gew.% enthält.

4. Verfahren nach Ansprüchen 1 bis 3, dadurch gekennzeichnet, daß man in der zweiten Stufe drucklos arbeitet.